# EUROPÄISCHE PATENTSCHRIFT

(11) **EP 2 885 142 B1**
(45) Veröffentlichungstag und Bekanntmachung des Hinweises auf die Patenterteilung: **13.11.2019**
(21) Anmeldenummer: 13744556.5
(22) Anmeldetag: 01.08.2013
(51) Int. Cl.: B60K 35/00, B60H 1/00, B60K 37/06

(54) **BEDIENVORRICHTUNG ZUM EINSTELLEN EINER KLIMATISIERUNGSVORRICHTUNG EINES FAHRZEUGS UND VERFAHREN HIERZU**
OPERATING DEVICE FOR ADJUSTING AN AIR CONDITIONING DEVICE OF A VEHICLE AND CORRESPONDING METHOD
DISPOSITIF DE RÉGLAGE D'UN SYSTÈME DE CLIMATISATION D'UN VÉHICULE ET PROCÉDÉ CORRESPONDANT

(30) Priorität: 15.08.2012 DE 102012016109
(43) Veröffentlichungstag der Anmeldung: 24.06.2015
(73) Patentinhaber: Volkswagen Aktiengesellschaft, 38440 Wolfsburg (DE)
(72) Erfinder: PETERSEN, Sönke, 12205 Berlin (DE); BUDZYNSKI, Tobias, 13503 Berlin (DE); KUHN, Mathias, 14129 Berlin (DE); JUN, Mi-Ran, 12059 Berlin (DE)
(86) Internationale Anmeldenummer: PCT/EP2013/066195
(87) Internationale Veröffentlichungsnummer: WO 2014/026854

(56) Entgegenhaltungen:
- EP-A2- 1 291 205
- DE-A1-102007 023 502
- DE-A1-102010 011 039
- JP-A- S6 422 619
- JP-A- 2003 211 944

## Beschreibung

Die vorliegende Erfindung betrifft eine Bedienvorrichtung zum Einstellen einer Klimatisierungsvorrichtung eines Fahrzeugs. Die Klimatisierungsvorrichtung umfasst Belüftungselemente zum Klimatisieren des Innenraums des Fahrzeugs. Die Bedienvorrichtung weist eine Anzeigefläche und eine Eingabevorrichtung zum Eingeben von Steuerbefehlen für die Klimatisierungsvorrichtung des Fahrzeugs auf. Ferner umfasst die Bedienvorrichtung eine Steuervorrichtung, die mit der Anzeigefläche und der Eingabevorrichtung gekoppelt ist, mit der Graphikdaten für eine Anzeige auf der Anzeigefläche erzeugbar sind. Mit der Steuervorrichtung sind mittels der Eingabevorrichtung eingegebene Steuerbefehle in Steuersignale für die Klimatisierungsvorrichtung des Fahrzeugs umsetzbar. Des Weiteren betrifft die Erfindung ein Verfahren zum Einstellen einer Klimatisierungsvorrichtung eines Fahrzeugs.

In einem Kraftfahrzeug gibt es eine Vielzahl von Funktionseinrichtungen, die erforderlich sind, um das Fahrzeug zu führen, die der Sicherheit und dem Komfort der Fahrzeuginsassen dienen und die den Fahrzeuginsassen schließlich Informationen und Warnungen anzeigen. Außerdem dienen die Funktionseinrichtungen der Kommunikation der Fahrzeuginsassen mit außerhalb des Fahrzeugs angeordneten Einrichtungen. Zu diesen Funktionseinrichtungen zählen beispielsweise Einrichtungen zum Steuern der lichttechnischen Einrichtungen des Fahrzeugs, eine Klimatisierungsvorrichtung, Fahrerassistenzsysteme, Navigationssysteme, Telekommunikationssysteme und Multimediasysteme. Um diese Funktionseinrichtungen zu bedienen ist zumindest eine Vorrichtung für Eingaben des Nutzers und eine Anzeigevorrichtung zum Darstellen von Informationsanzeigen der Funktionseinrichtungen erforderlich. Ferner wird die Bedienung der Funktionseinrichtungen häufig von Anzeigen auf einem Display unterstützt, welches beispielsweise in der Mittelkonsole des Fahrzeugs angeordnet ist.

Aus der EP 1 291 205 A2 ist eine Bedienvorrichtung zum Einstellen einer Klimatisierungsvorrichtung eines Fahrzeugs bekannt, die ein berührungsempfindliches Display umfasst, welches mit einer Steuervorrichtung gekoppelt ist. Zum Einstellen der Klimatisierungsvorrichtung werden die gegenwärtigen Einstellungen und die verfügbaren Einstelloptionen auf dem Display angezeigt. Dabei werden zumindest die Luftströmrate, die Luftverteilung und die Lufttemperatur in Form von analogen Symbolen dargestellt, deren Einstellungen durch Berührung verändert werden können.

Aus der DE 10 2009 011 709 A1 ist eine Instrumententafel mit einer Anzeige- und Bedienkomponente bekannt. Die Anzeige- und Bedienkomponente umfasst einen Anzeige- und Bedienbereich, in dem unter anderem eine Klima- und Belüftungssteuerung angeordnet ist. Mittels dieser Anzeige kann die Ausströmrichtung und das Ausströmvolumen von Belüftungselementen eingestellt werden.

Die DE 10 2010 011 039 A1 beschreibt ein Verfahren zum Betreiben einer Benutzerschnittstelle, bei dem ein drehbare Fläche dargestellt wird, bei der Vorder- und Rückseite für verschiedene Einstellungen vorgesehen sind. Beispielsweise können auf der Vorderseite die Einstellungen der Klimaanlage eines Fahrzeugs dargestellt werden, während die Rückseite eine Vornahme detaillierter Anpassungen erlaubt. Insbesondere ist dabei für die Vorderseite eine Schnittdarstellung des Fahrzeuginnenraums vorgesehen, wobei Pfeile die Richtung von Luftströmen angeben können und ferner Einstellparameter, wie etwa ein Temperaturwert, angezeigt werden können.

Die JP S64 22619 A beschreibt eine Anzeigesteuerung einer Klimaanlage, wobei die Luftauslässe am Armaturenbrett eines Fahrzeugs angezeigt werden. Durch ein- oder mehrmaliges Tippen im Bereich eines Luftauslasses kann die Intensität der einströmenden Luft reguliert werden, wobei ein oder mehrere Pfeile dargestellt werden. Die Einstellung erfolgt lediglich durch Tippen eines bestimmten Bereichs auf der Oberfläche des Touchscreens. Bei der Bedienung von Einrichtungen eines Fahrzeugs ergeben sich sehr spezielle Anforderungen. Die Bedienung erfolgt im Fahrzeug nämlich unter anderem durch den Fahrer. Der Bedienvorgang sollte daher nicht zu einer Ablenkung des Fahrers während der Fahrt führen. Hierfür sollte der Bedienvorgang so intuitiv wie möglich vom Fahrer erfassbar und sehr schnell durchführbar sein, so dass der Fahrer beim Durchführen des Bedienvorgangs seinen Blick allenfalls sehr kurzzeitig vom Fahrgeschehen abwenden muss.

Der vorliegenden Erfindung liegt daher die Aufgabe zugrunde, eine Bedienvorrichtung und ein Verfahren der eingangs genannten Art bereitzustellen, die eine einfache, schnelle und intuitive Einstellung der Klimatisierungsvorrichtung des Fahrzeugs erlauben.

Erfindungsgemäß wird diese Aufgabe durch eine Bedienvorrichtung mit den Merkmalen des Anspruchs 1 und ein Verfahren mit den Merkmalen des Anspruchs 2 gelöst. Vorteilhafte Ausgestaltungen und Weiterbildungen ergeben sich aus den abhängigen Ansprüchen.

Die eingangs beschriebene Bedienvorrichtung ist dadurch gekennzeichnet, dass die Steuervorrichtung so ausgebildet ist, dass solche Graphikdaten erzeugt werden, dass auf der Anzeigefläche eine graphische Darstellung des Innenraums des Fahrzeugs wiedergegeben wird, wobei innerhalb der graphischen Darstellung des Innenraums des Fahrzeugs Schaltsymbole angezeigt werden, welche die Einströmrichtung und/oder die Einströmrate und/oder die Einströmtemperatur der durch die Belüftungselemente in den Innenraum einströmenden Luft darstellen. Ferner weist erfindungsgemäß die Eingabevorrichtung eine Erfassungseinrichtung auf, mittels welcher Eingaben eines Nutzers erfasst werden, die in Bezug auf die Schaltsymbole auf oder vor der Anzeigefläche ausgeführt werden.

Die erfindungsgemäße Bedienvorrichtung ermöglicht es insbesondere dem Fahrer des Fahrzeugs die Klimatisierungsvorrichtung schnell und intuitiv einzustellen. Durch die Darstellung des Innenraums des Fahrzeugs auf der Anzeigefläche der Bedienvorrichtung kann sich der Fahrer schnell orientieren. Innerhalb dieser graphischen Darstellung des Innenraums werden die Schaltsymbole zum Einstellen der Klimatisierungsvorrichtung angezeigt. Dies ermöglicht es dem Fahrer schnell und intuitiv einen Zusammenhang zwischen den Schaltsymbolen für die Einstellungen und den zugehörigen Belüftungselementen im Innenraum des Fahrzeugs herzustellen. Der Bedienvorgang selbst kann dann einfach und intuitiv anhand der Schaltsymbole ausgeführt werden. Der Nutzer muss sich also nicht merken, welche Bedienelemente zu welchen Belüftungselementen des Fahrzeugs gehören. Auch muss er nicht piktogrammartige Symbole interpretieren, da die angezeigten Schaltsymbole direkt zur Anzeige des Innenraums des Fahrzeugs korrespondieren.

Gemäß einer Ausgestaltung der erfindungsgemäßen Bedienvorrichtung umfasst die Eingabevorrichtung eine berührungsempfindliche Oberfläche, die auf der Anzeigefläche ausgebildet ist und auf der Eingaben ausführbar sind. Es wird somit ein sogenannter Touchscreen bereitgestellt. Die Verwendung eines Touchscreens als Eingabevorrichtung hat den Vorteil, dass keine oder nur eine geringe Anzahl an mechanischen Bedienelementen im Fahrzeuginnenraum angeordnet sein müssen. Ferner lässt sich ein Bedienkonzept, welches von einem Touchscreen unterstützt wird, sehr einfach an verschiedene Fahrzeugversionen anpassen.

Ferner kann die Bedienvorrichtung eine Annäherungserfassungseinrichtung umfassen, mittels der eine Annäherung eines Betätigungsobjekts an die Anzeigefläche durch einen Eintritt des Betätigungsobjekts in einen Detektionsbereich vor der Anzeigefläche erfassbar ist. In Abhängigkeit von dem Erfassen des Eintritts des Betätigungsobjekts, wie beispielsweise der Hand oder der Fingerspitze eines Nutzers, in den Detektionsbereich kann die Anzeige auf der Anzeigefläche von der Steuervorrichtung verändert werden. Es können insbesondere die Schaltsymbole hervorgehoben dargestellt werden, damit der Nutzer schnell und intuitiv erkennt, welche graphische Elemente zum Einstellen der Klimatisierungsvorrichtung betätigbar sind.

Die Annäherungserfassungseinrichtung kann beispielsweise eine Reflektionslichtschranke umfassen, die mindestens ein Leuchtmittel zum Emittieren von elektromagnetischer Detektionsstrahlung in den Detektionsbereich und ein Empfangselement zum Detektieren eines an dem Betätigungsobjekt gestreuten und/oder reflektierten Anteils der Detektionsstrahlung umfassen. Sie kann insbesondere so ausgebildet sein, das Betätigungsobjekt in dem Detektionsbereich anhand der Intensität der empfangenen Detektionsstrahlung zu erkennen. Die Annäherungserfassungseinrichtung kann ferner verschiedene Leuchtmittel für die einzelnen Detektionszonen umfassen, die jeweils elektromagnetische Detektionsstrahlung in die jeweilige Detektionszone emittieren. Des Weiteren kann eine Modulationsvorrichtung zum Modulieren der emittierten Detektionsstrahlung vorgesehen sein, so dass sich die Detektionsstrahlung, die in die einzelnen Detektionszonen emittiert wird, jeweils hinsichtlich ihrer Modulation unterscheidet. In diesem Fall kann die Annäherungserfassungseinrichtung auch eine Analyseeinheit umfassen, die so ausgebildet ist, dass die empfangene reflektierte und/oder gestreute Detektionsstrahlung hinsichtlich ihrer Modulation analysiert werden kann, um zu ermitteln, in welcher Detektionszone die Detektionsstrahlung an einem Betätigungsobjekt gestreut oder reflektiert wurde.

Bei dem erfindungsgemäßen Verfahren zum Einstellen der Klimatisierungsvorrichtung des Fahrzeugs wird von einer Anzeigefläche eine graphische Darstellung des Innenraums des Fahrzeugs wiedergegeben. Beispielsweise kann diese graphische Darstellung den Innenraum des Fahrzeugs perspektivisch dreidimensional wiedergeben. Bei der graphischen Darstellung des Innenraums des Fahrzeugs werden ferner Schaltsymbole angezeigt, welche die Einströmrichtung und/oder die Einströmrate und/oder die Einströmtemperatur der durch Belüftungselemente in den Innenraum einströmenden Luft darstellen. Bei dem Verfahren wird eine Eingabe eines Nutzers erfasst, die in Bezug auf ein Schaltsymbol auf oder vor der Anzeigefläche ausgeführt wird. In Abhängigkeit von der Art der erfassten Eingabe und in Abhängigkeit davon, in Bezug zu welchem Schaltsymbol die Eingabe ausgeführt wurde, wird ein Steuerbefehl für die Klimatisierungsvorrichtung des Fahrzeugs erzeugt.

Das erfindungsgemäße Verfahren kann insbesondere von der vorstehend beschriebenen erfindungsgemäßen Bedienvorrichtung ausgeführt werden. Es weist somit dieselben Vorteile wie diese Bedienvorrichtung auf.

Gemäß dem erfindungsgemäßen Verfahren wird die Eingabe auf einer berührungsempfindlichen Oberfläche ausgeführt, die auf der Anzeigefläche ausgebildet ist. Dabei wird die Eingabe dadurch ausgeführt, dass die berührungsempfindliche Oberfläche bei einem Schaltsymbol mit einem Betätigungsobjekt berührt wird, daraufhin ein zu dem Schaltsymbol gehöriges Schaltelement angezeigt wird, welches vom Nutzer betätigt wird, woraufhin schließlich die Betätigung des Nutzers erfasst und in ein Steuerbefehl für die Klimatisierungsvorrichtung des Fahrzeugs umgesetzt wird. Durch diese Art der Eingabe auf der berührungsempfindlichen Oberfläche kann insbesondere die Einströmtemperatur der Luft eines bestimmten Belüftungselements im Innenraum des Fahrzeugs eingestellt werden. Hierfür zeigt beispielsweise das Schaltelement die aktuelle Einströmtemperatur des entsprechenden Belüftungselements an, sowie Schaltflächen zum Erhöhen und Erniedrigen dieser Einströmtemperatur.

Gemäß dem erfindungsgemäßen Verfahren wird die berührungsempfindliche Oberfläche bei einem Schaltsymbol mit einem Betätigungsobjekt berührt. Daraufhin wird das Betätigungsobjekt auf der berührungsempfindlichen Oberfläche bewegt. Anschließend wird die Berührung des Betätigungsobjekts von der berührungsempfindlichen Oberfläche wieder gelöst.

Auf diese Weise kann beispielsweise die Einströmrichtung der durch die Belüftungselemente in den Innenraum einströmenden Luft eingestellt werden. Die Schaltsymbole umfassen in diesem Fall beispielsweise Pfeildarstellungen. Die berührungsempfindliche Oberfläche wird bei der Pfeildarstellung eines Schaltsymbols mit dem Betätigungsobjekt berührt. Daraufhin wird das Betätigungsobjekt auf der berührungsempfindlichen Oberfläche in Richtung der gewünschten Einströmrichtung bewegt. Anschließend wird die Berührung des Betätigungsobjekts von der berührungsempfindlichen Oberfläche wieder gelöst. Der Nutzer kann auf diese Weise mittels des Touchscreens die Pfeildarstellung verändern und hierdurch in der Darstellung des Innenraums des Fahrzeugs die Einströmrichtung für ein bestimmtes Belüftungselement einfach und intuitiv einstellen.

Gleichermaßen kann auf diese Weise die Einströmrate der durch die Belüftungselemente in den Innenraum einströmenden Luft eingestellt werden. Auch in diesem Fall wird die berührungsempfindliche Oberfläche bei der Pfeildarstellung eines Schaltsymbols mit dem Betätigungsobjekt berührt. Das Betätigungsobjekt wird darauf auf der berührungsempfindlichen Oberfläche in Richtung des Pfeils oder in entgegengesetzte Richtung bewegt. Anschließend wird die Berührung des Betätigungsobjekts von der berührungsempfindlichen Oberfläche wieder gelöst. Der Nutzer kann hierdurch den Pfeil der Pfeildarstellung verlängern oder verkürzen und auf diese Weise die Einströmrate eines bestimmten Belüftungselements erhöhen oder erniedrigen. Auch dieser Bedienvorgang ist für den Nutzer sehr einfach und intuitiv durchführbar.

Ferner kann durch einen einzigen Bedienvorgang sowohl die Einströmrichtung als auch die Einströmrate eines bestimmten Belüftungselements eingestellt werden, indem der Nutzer bei der Pfeildarstellung eines Schaltsymbols, welches zu einem bestimmten Betätigungsobjekt gehört, sowohl die Länge des Pfeils auch die Richtung des Pfeils durch eine Bewegung des Betätigungsobjekts auf der berührungsempfindlichen Oberfläche verändert. Auf diese Weise lassen sich verschiedene Parameter der Klimatisierungsvorrichtung des Fahrzeugs in einem einzigen Bedienvorgang schnell und intuitiv verändern.

Ferner ist es möglich, dass eine Annäherung eines Betätigungsobjekts an die Anzeigefläche durch einen Eintritt des Betätigungsobjekts in einen Detektionsbereich vor der Anzeigefläche erfasst wird und, wenn der Eintritt des Betätigungsobjekts in den Detektionsbereich erfasst wurde, werden die Schaltsymbole verändert dargestellt. Hierdurch werden insbesondere die graphischen Elemente, welche auf der Anzeigefläche angezeigt werden, hervorgehoben, die bedienbar sind.

Unter einem Schaltsymbol, einem Schaltelement und einer Schaltfläche werden im Sinne der Erfindung Steuerelemente einer graphischen Benutzerschnittstelle verstanden. Ein Schaltsymbol, ein Schaltelement und eine Schaltfläche unterscheiden sich von Elementen und Flächen zur reinen Informationsanzeige, so genannten Anzeigeelementen bzw. Anzeigenflächen, darin, dass sie auswählbar sind. Bei einer Auswahl eines Schaltsymbols, eines Schaltelements und einer Schaltfläche wird eine zugeordnete Funktion ausgeführt. Die Funktion kann nur zu einer Veränderung der Informationsanzeige führen. Ferner können über das Schaltsymbol, das Schaltelement und die Schaltfläche Einrichtungen gesteuert werden, deren Bedienung von der Informationsanzeige unterstützt wird. Die Schaltsymbole, Schaltelemente und Schaltflächen können somit herkömmliche mechanische Schalter ersetzen. Sie können beliebig für eine frei programmierbaren Anzeigefläche erzeugt und von dieser angezeigt werden.

Des Weiteren betrifft die Erfindung ein Fahrzeug mit der erfindungsgemäßen Bedienvorrichtung. Die Anzeigefläche ist in diesem Fall so angeordnet, dass sie gut von dem Fahrer und/oder dem Beifahrer erreicht werden kann. Beispielsweise ist die Anzeigefläche in der Mittelkonsole des Fahrzeugs angeordnet.

Die Erfindung wird nun anhand von Ausführungsbeispielen mit Bezug zu den Zeichnungen erläutert.
- Figur 1: zeigt schematisch ein Ausführungsbeispiel der erfindungsgemäßen Bedienvorrichtung und die Kopplung der Bedienvorrichtung mit anderen Einrichtungen des Fahrzeugs,
- Figur 2: zeigt eine Seitenansicht der Anzeigevorrichtung des Ausführungsbeispiels der Bedienvorrichtung zur Darstellung des Detektionsbereichs,
- Figur 3: zeigt den Innenraum des Fahrzeugs, in welchem das Ausführungsbeispiel der erfindungsgemäßen Bedienvorrichtung untergebracht ist,
- Figuren 4 bis 9: zeigen Anzeigen, die auf der Anzeigefläche des Ausführungsbeispiels der erfindungsgemäßen Bedienvorrichtung angezeigt werden und die von einem Ausführungsbeispiel des erfindungsgemäßen Verfahrens erzeugt werden, und

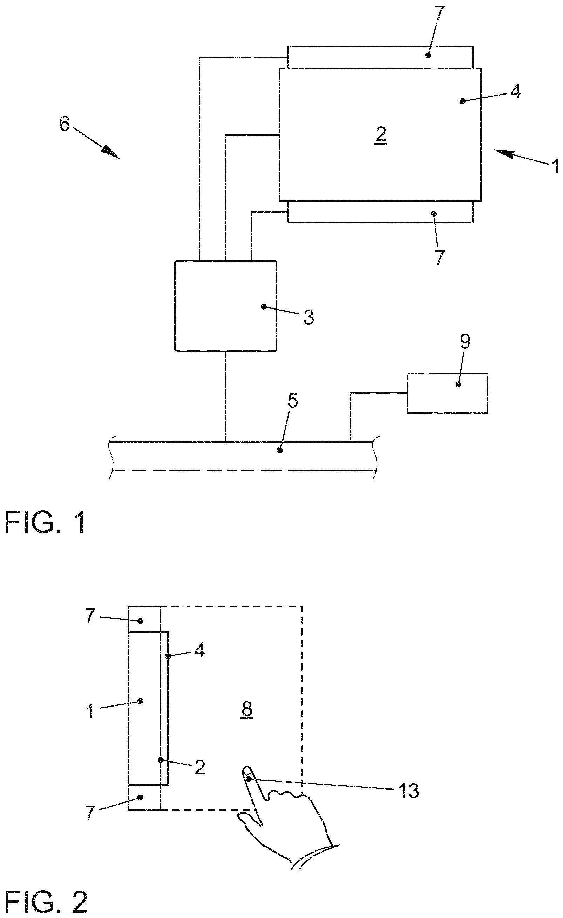

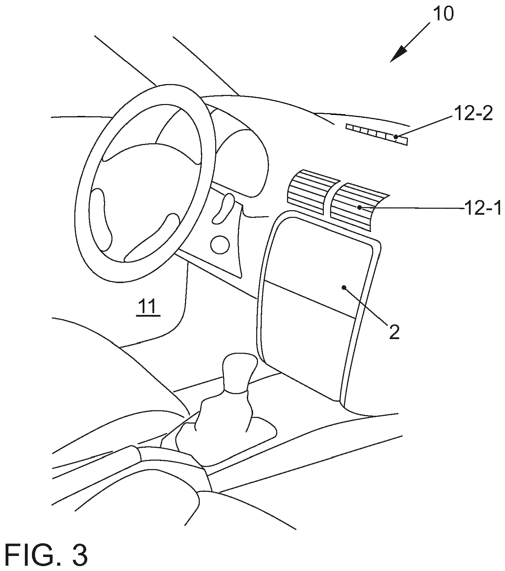

Mit Bezug zu den Figuren 1 bis 3 wird ein Ausführungsbeispiel der erfindungsgemäßen Bedienvorrichtung 6 und dessen Anordnung in einem Fahrzeug 10 erläutert:
Die Bedienvorrichtung 6 umfasst eine Anzeigevorrichtung 1 mit einer Anzeigefläche 2, die so im Innenraum des Fahrzeugs 10 angeordnet ist, dass sie für zumindest einen Fahrzeuginsassen, insbesondere den Fahrer, gut sichtbar ist. Die Anzeigefläche 2 kann von einem Display, insbesondere einem Flüssigkeitskristalldisplay, beliebiger Bauart bereitgestellt werden.

Die Bedienvorrichtung 6 umfasst ferner eine Steuervorrichtung 3 und eine Eingabevorrichtung. Die Steuervorrichtung 3 ist mit der Anzeigevorrichtung 1 verbunden, mit welcher Graphikdaten zur Informationsdarstellung auf der Anzeigefläche 2 erzeugbar sind. Die Eingabevorrichtung ist als berührungsempfindliche Oberfläche 4 auf der Anzeigefläche 2 ausgebildet. Es wird somit ein sogenannter Touchscreen bereitgestellt.

Beispielsweise kann eine Folie über der Anzeigefläche 2 angeordnet sein, mit welcher die Position einer Berührung eines Betätigungsobjekt 13 detektiert werden kann. Bei dem Betätigungsobjekt handelt es sich insbesondere um die Fingerspitze 13 eines Nutzers. Die Folie kann z. B. als resistive Touchfolie, kapazitive Touchfolie oder piezoelektrische Folie ausgebildet sein. Ferner kann die Folie so ausgebildet sein, dass ein Wärmestrom, der z. B. von der Fingerspitze 13 eines Nutzers ausgeht, gemessen wird. Aus der zeitlichen Entwicklung der Berührung der Folie lassen sich verschiedene Eingaben gewinnen. Beispielsweise kann im einfachsten Fall das Berühren der Folie bei einer bestimmten Position erfasst und einem auf der Anzeigefläche 2 angezeigten graphischen Objekt zugeordnet werden. Des Weiteren kann die Länge der Berührung bei einer bestimmten Position oder innerhalb eines bestimmten Bereichs erfasst werden. Auf der Anzeigefläche 2 können betätigbare Schaltsymbole, Schaltelemente oder Schaltflächen angezeigt werden.

Des Weiteren umfasst die Bedienvorrichtung 6 eine Annäherungserfassungseinrichtung 7. Mittels der Annäherungserfassungseinrichtung 7 kann ein Betätigungsobjekt 13 in einem Detektionsbereich 8 erfasst werden. Der Detektionsbereich 8 ist in Fig. 2 im Detail dargestellt. Der Detektionsbereich 8 ist so gebildet, dass eine Annäherung eines Betätigungsobjekts 13 an die berührungsempfindliche Oberfläche 4 auf der Anzeigefläche 2 erfasst wird.

In dem hier beschriebenen Ausführungsbeispiel bildet der Detektionsbereich 8 zumindest ein Volumen vor der berührungsempfindliche Oberfläche 4. Es ist insbesondere ein Quader gebildet, der mit seinen Seitenflächen in der Erstreckung, die parallel zu der berührungsempfindlichen Oberfläche 4 verläuft, die berührungsempfindliche Oberfläche 4 vollständig umschließt. In einer Richtung senkrecht zur berührungsempfindlichen Oberfläche 4 reicht der Quader von der berührungsempfindlichen Oberfläche 4 oder unmittelbar vor der berührungsempfindlichen Oberfläche 4 bis zu einem Abstand von z. B. etwa 40 cm. Der Abstand der äußeren Grenze des Detektionsbereichs 8 vor der berührungsempfindlichen Oberfläche 4 wird dabei so gewählt, dass eine Annäherung an die berührungsempfindliche Oberfläche 4 so rechtzeitig detektiert werden kann, dass die Anzeige auf der Anzeigefläche 2 früh genug verändert werden kann, um den Nutzer bei einer Eingabe zu unterstützen. Ferner sollte der Abstand des Detektionsbereichs 8 von der berührungsempfindlichen Oberfläche 4 so gewählt werden, dass das Betätigungsobjekt 13 oder ein anderes Objekt so selten wie möglich in den Detektionsbereich 8 bewegt wird, wenn keine Bedienung der berührungsempfindlichen Oberfläche 4 beabsichtigt ist.

Weitere Details zu verschiedenen Ausbildungen der Annäherungserfassungseinrichtung 7 sind beispielsweise in der WO 2011/051361 A1 beschrieben.

Die Annäherungserfassungseinrichtung 7 überträgt die aktuelle Position eines Betätigungsobjekts 13 im Detektionsbereich 8 fortwährend an die Steuervorrichtung 3. In Abhängigkeit von diesem Signal kann die Steuervorrichtung 3 die Anzeige auf der Anzeigefläche 2 verändern.

Schließlich ist die Steuervorrichtung 3 mit einem Datenbus 5 gekoppelt. Über diesen Datenbus 5 ist die Steuervorrichtung 3 mit weiteren Einrichtungen des Fahrzeugs 10 verbunden, zu denen Informationen auf der Anzeigefläche 2 angezeigt werden sollen und die mittels der Bedienvorrichtung 6 bedient werden sollen. Mittels Bedienvorrichtung 6 und durch das Verfahren können den Fahrzeuginsassen Informationen angezeigt werden. Ferner können die Fahrzeuginsassen mittels der Bedienvorrichtung 6 Einrichtungen des Fahrzeugs 10 bedienen und die Anzeige steuern.

Im vorliegenden Ausführungsbeispiel kann mittels der Bedienvorrichtung 6 die Klimatisierungsvorrichtung 9 des Fahrzeugs 10 eingestellt werden. Die Klimatisierungsvorrichtung 9 umfasst Belüftungselemente 12-1 und 12-2, über welche Luft in den Innenraum 11 des Fahrzeugs 10 einströmen kann. Mittels an sich bekannter Einstellmotoren zur Lageveränderung der Belüftungselemente 12-1 und 12-2 kann mittels der Steuervorrichtung 3 die Richtung der in den Innenraum 11 des Fahrzeugs 10 einströmenden Luft verändert werden. Ferner kann mittels der Steuervorrichtung 3 auf an sich bekannte Weise die Einströmrate und die Einströmtemperatur der durch die Belüftungselemente 12-1 und 12-2 in den Innenraum 11 einströmenden Luft eingestellt werden. Durch die Klimatisierungsvorrichtung 9 kann die Temperatur im Innenraum 11 des Fahrzeugs 10 beliebig geregelt werden. Die Temperatur kann dabei relativ zur Umgebungstemperatur erhöht oder erniedrigt werden.

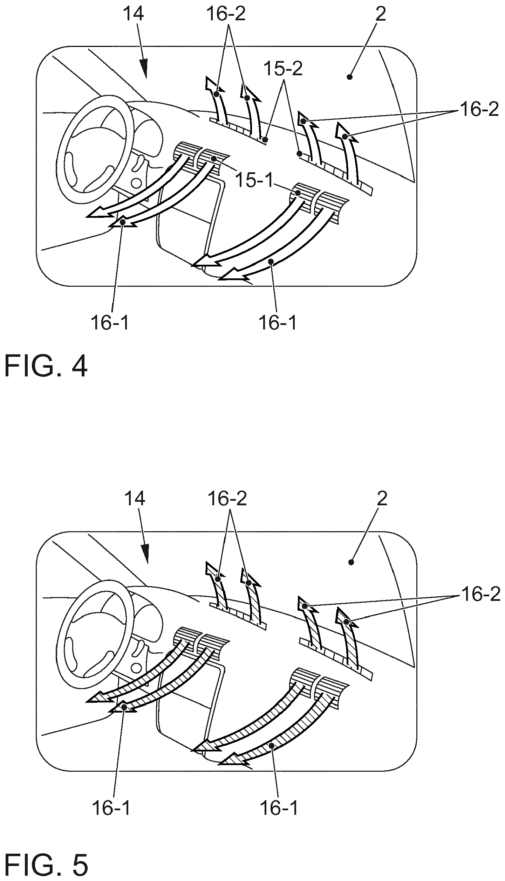

Im Folgenden wird mit Bezug zu den Figuren 4 bis 9 ein Ausführungsbeispiel des erfindungsgemäßen Verfahrens sowie die Ausgestaltung der erfindungsgemäßen Bedienvorrichtung 6, insbesondere der Steuervorrichtung 3, erläutert:
In Figur 4 ist die Anzeige auf der Anzeigefläche 2 gezeigt, welche von der Steuervorrichtung 3 erzeugt worden ist. Es wird der Innenraum 11 des Fahrzeugs 10 mittels einer perspektivischen Darstellung 14 wiedergegeben. In der perspektivischen Darstellung 14 kann der Betrachter schnell und intuitiv die körperlichen Elemente des Innenraums 11 des Fahrzeugs 10 wiedererkennen. Beispielsweise werden die Belüftungselemente 12-1, 12-2 mittels der graphischen Objekte 15-1 und 15-2 visualisiert.

Zusätzlich zu der graphischen Darstellung 14 des Innenraums 11 werden Schaltsymbole 16-1 und 16-2 angezeigt.

Jedem Schaltsymbol 16-1, 16-2 ist dabei ein separat einstellbares Belüftungselement 12-1, 12-2 zugeordnet. Dies wird durch die Nähe der graphischen Darstellung der Schaltsymbole 16-1, 16-2 zu entsprechenden graphischen Objekten 15-1, 15-2 visualisiert, die den Belüftungselementen 12-1, 12-2 zugeordnet sind.

Die Schaltsymbole 16-1, 16-2 umfassen Pfeildarstellungen. Der Pfeil dieser Pfeildarstellungen beginnt bei dem graphischen Objekt 15-1, 15-2 für die Darstellung der Belüftungselemente 12-1, 12-2 und zeigt in Strömungsrichtung die Luft, die in den Innenraum 11 des Fahrzeugs 10 durch das entsprechende Belüftungselement 12-1, 12-2 eintritt. Die Länge der Pfeildarstellung visualisiert die Einströmrate. Ferner kann durch die Wahl der Farbe bei der Darstellung der Schaltsymbole 16-1, 16-2 die Einströmtemperatur der durch die Belüftungselemente 12-1, 12-2 in den Innenraum einströmenden Luft visualisiert werden.

In Figur 4 ist die Wiedergabe der Anzeigefläche 2 in einem Anzeigezustand dargestellt, wenn kein Bedienvorgang ausgeführt wird. Wenn der Nutzer nun mit seiner Fingerspitze 13 in den Detektionsbereich 8 eintritt, wird dies von der Annäherungserfassungseinrichtung 7 erfasst. Die Steuervorrichtung 3 verändert daraufhin die Graphikdaten für die Anzeige auf der Anzeigefläche 2. Nachdem die Fingerspitze 13 des Nutzers in den Detektionsbereich 8 eingetreten ist, wird die in Figur 5 gezeigte Anzeige von der Anzeigefläche 2 angezeigt. Diese Anzeige unterscheidet sich von der in Figur 4 gezeigten Anzeige dadurch, dass die Schaltsymbole 16-1, 16-2 hervorgehoben dargestellt werden. Der Betrachter kann somit schnell und intuitiv erkennen, welche graphischen Objekte, die auf der Anzeigefläche 2 angezeigt werden, betätigt werden können. In Figur 5 ist diese Hervorhebung durch eine Schraffur der Schaltsymbole 16-1, 16-2 dargestellt. Im Ausführungsbeispiel kann das Hervorheben dieser Schaltsymbole 16-1, 16-2 jedoch auf verschiedene Art und Weise erfolgen, beispielsweise durch eine Änderung der Farbsättigung, der Transparenz und/oder der Farbe der Schaltsymbole 16-1, 16-2 erfolgen.

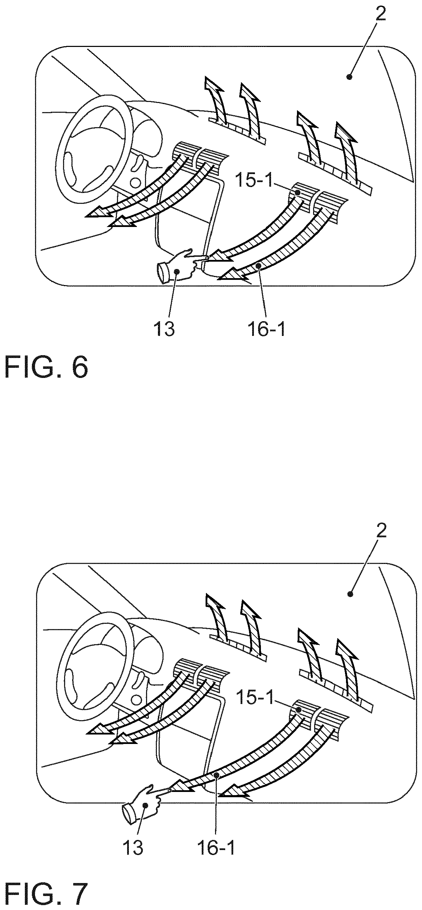

Wenn der Nutzer nun einen Parameter eines Belüftungselements 12-1 bzw. 12-2 der Klimatisierungsvorrichtung 9 verändern will, berührt er mit der Fingerspitze 13 die berührungsempfindliche Oberfläche 4 bei dem Schaltsymbol 16-1, welches dem graphischen Objekt 15-1 zugeordnet ist, welches wiederum dem Belüftungselement 12-1 zugeordnet ist, welches der Nutzer verstellen will, wie es in Figur 6 dargestellt ist.

Wenn der Nutzer nun die Einströmrate dieses Belüftungselements 12-1 vergrößern will, bewegt er die Fingerspitze 13 auf der berührungsempfindlichen Oberfläche 4 in Richtung des Pfeils des Schaltsymbols 16-1. Diese Bewegung auf der berührungsempfindlichen Oberfläche 4 wird von der Steuervorrichtung 3 erfasst. Im Wesentlichen gleichzeitig mit dem Erfassen dieser Bewegung auf der berührungsempfindlichen Oberfläche 4, verändert die Steuervorrichtung 3 die Graphikdaten für die Anzeigefläche 2 so, dass die Pfeildarstellung des Schaltsymbols 16-1 verändert wird. Der Pfeil folgt der Fingerspitze 13 des Nutzers. Die Pfeildarstellung wird somit länger. Dies interpretiert die Steuervorrichtung 3 als Steuerbefehl zum Erhöhen der Einströmrate aus dem zugeordneten Belüftungselement 12-1. Die Steuervorrichtung 3 erzeugt ein entsprechendes Steuersignal für die Klimatisierungsvorrichtung 9, welches derselben über den Datenbus 5 übertragen wird. Wenn der Nutzer durch Ziehen seiner Fingerspitze 13 auf der berührungsempfindlichen Oberfläche 4 die gewünschte Einströmrate erreicht hat, löst er die Fingerspitze 13 wieder von der berührungsempfindlichen Oberfläche 4. Es verbleibt ein verlängerter Pfeil des Schaltsymbols 16-1, welcher die erhöhte Einströmrate durch das zugeordnete Belüftungselement 12-1 visualisiert.

Auf analoge Weise kann der Nutzer durch die Bewegung seiner Fingerspitze 13 auf der berührungsempfindlichen Oberfläche 4 in entgegengesetzter Richtung die Pfeildarstellung verkleinern und die Einströmrate durch das entsprechende Belüftungselement 12-1 verringern.

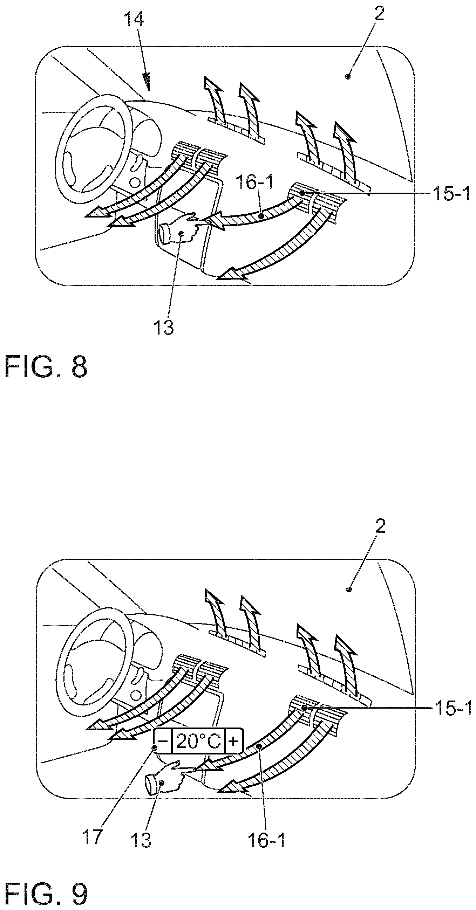

Des Weiteren kann der Nutzer ausgehend von der in Fig. 6 dargestellten Situation die Einströmrichtung der Luft verändern, welche durch ein bestimmtes Belüftungselement 12-1, 12-2 in den Innenraum 11 des Fahrzeugs 10 einströmt. Wie in Figur 8 gezeigt, bewegt der Nutzer hierfür seine Fingerspitze 13 auf der berührungsempfindlichen Oberfläche 4 zu einer Position, die bei der perspektivischen Darstellung 14 des Innenraums 11 des Fahrzeugs der gewünschten Einströmrichtung entspricht. Die Pfeildarstellung des Schaltsymbols 16-1 verändert sich entsprechend, wie es in Figur 8 dargestellt ist.

Gemeinsam mit der Einströmrichtung kann auch die Einströmrate verändert werden, indem der Nutzer durch die Endposition des Pfeils des Schaltsymbols 16-1 die Länge des Pfeils und die Richtung des Pfeils festlegt. Dies wird von der Steuervorrichtung 3 als entsprechender Steuerbefehl für die Einströmrate und die Einströmrichtung interpretiert, woraufhin die Steuervorrichtung 3 entsprechende Steuersignale für die Klimatisierungsvorrichtung 9 erzeugt und an dieselbe überträgt.

Schließlich kann der Nutzer anhand der Schaltsymbole 16-1, 16-2 auch die Einströmtemperatur für die Belüftungselemente 12-1, 12-2 einstellen. Hierfür berührt der Nutzer beispielsweise mit seiner Fingerspitze 13 ein bestimmtes Schaltsymbol 16-1 für ein bestimmtes Zeitintervall ohne die Fingerspitze 13 auf der berührungsempfindlichen Oberfläche 4 zu bewegen, wie dies in Figur 9 dargestellt ist. Nach Ablauf des Zeitintervalls werden von der Steuervorrichtung 3 Graphikdaten erzeugt, die dazu führen, dass ein Schaltelement 17 für die Temperatureinstellung des zugeordneten Belüftungselements 12-1 angezeigt wird. In diesem Schaltelement wird die aktuelle Temperatur der Luft angezeigt, welche durch das zugeordnete Belüftungselement 12-1 in den Innenraum 11 des Fahrzeugs 10 einströmt. Ferner werden Schaltflächen zum Erhöhen und Erniedrigen dieser Temperatur dargestellt. Durch Berühren der berührungsempfindlichen Oberfläche 4 bei den Positionen der Schaltflächen zum Erhöhen bzw. Erniedrigen der Temperatur kann der Nutzer Steuerbefehle erzeugen, welche von der Steuervorrichtung 3 in Steuersignale zum Erhöhen und Erniedrigen der entsprechenden Temperatur umgesetzt wird und an die Klimatisierungsvorrichtung 9 übertragen wird.

Alternativ oder zusätzlich kann das Schaltelement 17 auch dauerhaft angezeigt werden. Ferner wäre es möglich, dass zunächst nur die Einströmtemperatur angezeigt wird. Wenn der Nutzer die berührungsempfindliche Oberfläche 4 mit seiner Fingerspitze 13 bei einem entsprechenden Schaltsymbol 16-1, 16-2 berührt, werden die Schaltflächen zum Erhöhen oder Erniedrigen der entsprechenden Einströmtemperatur eingeblendet.

### Bezugszeichenliste

- 1: Anzeigevorrichtung
- 2: Anzeigefläche
- 3: Steuervorrichtung
- 4: berührungsempfindliche Oberfläche, Eingabevorrichtung
- 5: Datenbus
- 6: Bedienvorrichtung
- 7: Annäherungserfassungseinrichtung
- 8: Detektionsbereich
- 9: Klimatisierungsvorrichtung
- 10: Fahrzeug
- 11: Innenraum des Fahrzeugs
- 12-1, 12-2: Belüftungselemente
- 13: Fingerspitze der Hand eines Nutzers
- 14: perspektivische graphische Darstellung des Innenraums des Fahrzeugs
- 15-1, 15-2: graphische Objekte zur Darstellung der Belüftungselemente
- 16-1, 16-2: Schaltsymbole
- 17: Schaltelement

## Patentansprüche

1. Bedienvorrichtung (6) zum Einstellen einer Klimatisierungsvorrichtung (9) eines Fahrzeugs (10), die Belüftungselemente (12-1, 12-2) zur Klimatisierung des Innenraums (11) des Fahrzeugs (10) umfasst, mit
- einer Anzeigefläche (2),
- einer Eingabevorrichtung (4) zum Eingeben von Steuerbefehlen für die Klimatisierungsvorrichtung (9) des Fahrzeugs (10) und
- einer Steuervorrichtung (3), die mit der Anzeigefläche (2) und der Eingabevorrichtung (4) gekoppelt ist, mit der Graphikdaten für eine Anzeige auf der Anzeigefläche (2) erzeugbar sind und mit der mittels der Eingabevorrichtung (4) eingegebene Steuerbefehle in Steuersignalen für die Klimatisierungsvorrichtung (9) des Fahrzeugs (10) umsetzbar sind, wobei
- die Steuervorrichtung (3) so ausgebildet ist, dass solche Graphikdaten erzeugt werden, dass auf der Anzeigefläche (2) eine graphische Darstellung (14) des Innenraums (11) des Fahrzeugs (10) mit graphischen Objekten (15-1, 15-2), die den Belüftungselementen (12-1, 12-2) zugeordnet sind, wiedergegeben wird, wobei innerhalb der graphischen Darstellung (14) des Innenraums (11) des Fahrzeugs (10) Schaltsymbole (16-1, 16-2) angezeigt werden, welche die Einströmrichtung und/oder die Einströmrate und/oder die Einströmtemperatur der durch die Belüftungselemente (12-1, 12-2) in den Innenraum (11) einströmenden Luft darstellen,
- jedem Schaltsymbol (16-1, 16-2) ein separat einstellbares Belüftungselement (12-1, 12-2) zugeordnet ist, was durch die Nähe der graphischen Darstellung der Schaltsymbole (16-1, 16-2) zu den entsprechenden graphischen Objekten (15-1, 15-2) visualisiert wird,
- die Eingabevorrichtung (4) eine Erfassungseinrichtung (4; 18) aufweist, mittels welcher Eingaben eines Nutzers erfasst werden, die in Bezug auf die Schaltsymbole (16-1, 16-2) auf oder vor der Anzeigefläche (2) ausgeführt werden, und
- die Eingabevorrichtung eine berührungsempfindliche Oberfläche (4) umfasst, die auf der Anzeigefläche (2) ausgebildet ist und auf der Eingaben ausführbar sind,
**dadurch gekennzeichnet, dass**
die Eingabe auf einer berührungsempfindlichen Oberfläche (4), die auf der Anzeigefläche ausgebildet ist, dadurch ausführbar ist, dass die berührungsempfindliche Oberfläche (4) bei einem Schaltsymbol (16-1, 16-2) mit einem Betätigungsobjekt (13) berührt wird, das Betätigungsobjekt (13) daraufhin auf der berührungsempfindlichen Oberfläche (4) bewegt wird und anschließend die Berührung des Betätigungsobjekts (13) von der berührungsempfindlichen Oberfläche (4) wieder gelöst wird.

2. Verfahren zum Einstellen einer Klimatisierungsvorrichtung (9) eines Fahrzeugs (10), bei dem
- von einer Anzeigefläche (2) eine graphische Darstellung (14) des Innenraums (11) des Fahrzeugs (10) mit graphischen Objekten (15-1, 15-2), die den Belüftungselementen (12-1, 12-2) zugeordnet sind, wiedergegeben wird, bei der Schaltsymbole (16-1, 16-2) angezeigt werden, welche die Einströmrichtung und/oder die Einströmrate und/oder die Einströmtemperatur der durch Belüftungselemente (12-1, 12-2) in den Innenraum (11) einströmenden Luft darstellen,
- wobei jedem Schaltsymbol (16-1, 16-2) ein separat einstellbares Belüftungselement (12-1, 12-2) zugeordnet ist, was durch die Nähe der graphischen Darstellung der Schaltsymbole (16-1, 16-2) zu den entsprechenden graphischen Objekten (15-1, 15-2) visualisiert wird,
- eine Eingabe eines Nutzers erfasst wird, die in Bezug auf ein Schaltsymbol (16-1, 16-2) auf oder vor der Anzeigefläche (2) ausgeführt wird, wobei die Eingabe auf einer berührungsempfindlichen Oberfläche (4), die auf der Anzeigefläche ausgebildet ist, dadurch ausgeführt wird, dass die berührungsempfindliche Oberfläche (4) bei einem Schaltsymbol (16-1, 16-2) mit einem Betätigungsobjekt (13) berührt wird, das Betätigungsobjekt (13) daraufhin auf der berührungsempfindlichen Oberfläche (4) bewegt wird und anschließend die Berührung des Betätigungsobjekts (13) von der berührungsempfindlichen Oberfläche (4) wieder gelöst wird, und
- in Abhängigkeit von der Art der erfassten Eingabe und in Abhängigkeit davon, in Bezug zu welchem Schaltsymbol (16-1, 16-2) die Eingabe ausgeführt wurde, ein Steuerbefehl für die Klimatisierungsvorrichtung (9) des Fahrzeugs erzeugt wird.

3. Verfahren nach Anspruch 2,
**dadurch gekennzeichnet,**
**dass** die Eingabe auf einer berührungsempfindlichen Oberfläche (4), die auf der Anzeigefläche (2) ausgebildet ist, dadurch ausgeführt wird, dass die berührungsempfindliche Oberfläche (4) bei einem Schaltsymbol (16-1, 16-2) mit einem Betätigungsobjekt (13) berührt wird, daraufhin ein zu dem Schaltsymbol (16-1, 16-2) gehöriges Schaltelement (17) angezeigt wird, welches vom Nutzer betätigt wird, die Betätigung des Nutzers erfasst und in einen Steuerbefehl für die Klimatisierungsvorrichtung (9) des Fahrzeugs (10) umgesetzt wird.

4. Verfahren nach Anspruch 2 oder 3,
**dadurch gekennzeichnet,**
**dass** die Schaltsymbole (16-1, 16-2) Pfeildarstellungen umfassen und zum Einstellen der Einströmrichtung der durch die Belüftungselemente (12-1, 12-2) in den Innenraum (11) einströmenden Luft die berührungsempfindliche Oberfläche (4) bei der Pfeildarstellung eines Schaltsymbols (16-1, 16-2) mit dem Betätigungsobjekt (13) berührt wird, das Betätigungsobjekt (13) daraufhin auf der berührungsempfindlichen Oberfläche (4) in die Richtung der gewünschten Einströmrichtung bewegt wird und anschließend die Berührung des Betätigungsobjekts (13) von der berührungsempfindlichen Oberfläche (4) wieder gelöst wird.

5. Verfahren nach einem der Ansprüche 2 bis 4,
**dadurch gekennzeichnet,**
**dass** die Schaltsymbole (16-1, 16-2) Pfeildarstellungen umfassen und zum Einstellen der Einströmrate der durch die Belüftungselemente (12-1, 12-2) in den Innenraum (11) einströmenden Luft die berührungsempfindliche Oberfläche (4) bei der Pfeildarstellung eines Schaltsymbols (16-1, 16-2) mit dem Betätigungsobjekt (13) berührt wird, das Betätigungsobjekt (13) daraufhin auf der berührungsempfindlichen Oberfläche (4) in Richtung des Pfeils oder in entgegengesetzter Richtung bewegt wird und anschließend die Berührung des Betätigungsobjekts (13) von der berührungsempfindlichen Oberfläche (4) wieder gelöst wird.

6. Verfahren nach einem der Ansprüche 2 bis 5,
**dadurch gekennzeichnet,**
**dass** eine Annäherung eines Betätigungsobjekts (13) an die Anzeigefläche (2) durch einen Eintritt des Betätigungsobjekts (13) in einen Detektionsbereich (8) vor der Anzeigefläche (2) erfasst wird und, wenn der Eintritt des Betätigungsobjekts (13) in den Detektionsbereich (8) erfasst wurde, die Schaltsymbole (16-1, 16-2) verändert dargestellt werden.

## Claims

1. An operating device (6) for adjusting an air conditioning device (9) of a vehicle (10), which comprises air ventilation elements (12-1, 12-2) for air-conditioning the interior (11) of the vehicle (10), having
- a display surface (2),
- an input device (4) for entering control commands for the air conditioning device (9) of the vehicle (10), and
- a control device (3), which is coupled to the display surface (2) and to the input device (4), with which graphic data for a display on the display surface (2) can be generated and with which control commands entered by means of the input device (4) can be converted into control signals for the air conditioning device (9) of the vehicle 10), wherein
- the control device (3) is designed such that such graphic data are generated, that a graphic representation (14) of the interior (11) of the vehicle (10) is depicted on the display surface (2) with graphic objects (15-1, 15-2) which are associated with the ventilation elements (12-1, 12-2), wherein within the graphic representation (14) of the interior (11) of the vehicle (10) switching symbols (16-1, 16-2) are displayed, which represent the inflow direction and/or the inflow rate and/or the inflow temperature of the air flowing into the interior (11) through the ventilation elements (12-1, 12-2),
- to each switching symbol (16-1, 16-2) a separately adjustable ventilation element (12-1, 12-2) is assigned, which is visualized by the proximity of the graphic representation of the switching symbols (16-1, 16-2) to the corresponding graphic objects (15-1, 15-2),
- the input device (4) has a detection device (4; 18), by means of which a user's inputs are detected, which are performed with respect to the switching symbols (16-1, 16-2) on or in front of the display device (2), and
- the input device (4) comprises a touch-sensitive surface (4), which is formed on the display surface (2) and on which inputs can be performed,
**characterized in that**
the inputs can be performed on a touch-sensitive surface (4), which is formed on the display surface, **in that** the touch-sensitive surface (4) in the case of a switching symbol (16-1, 16-2) is touched with an actuating object (13), which actuating object (13) thereupon is moved on the touch-sensitive surface (4) and subsequently the contact of the actuating object (13) is released again from the touch-sensitive surface (4).

2. A method for adjusting an air conditioning device (9) of a vehicle (10), in which
- a graphic representation (14) of the interior (11) of the vehicle (10) is depicted by the display surface (2) with graphic objects (15-1, 15-2), which are associated with the ventilation elements (12-1, 12-2), in which switching symbols (16-1, 16-2) are displayed, which represent the inflow direction and/or the inflow rate and/or the inflow temperature of the air flowing into the interior (11) through the ventilation elements (12-1, 12-2),
- wherein to each switching symbol (16-1, 16-2) a separately adjustable ventilation element (12-1, 12-2) is assigned, which is visualized by the proximity of the graphic representation of the switching symbols (16-1, 16-2) to the corresponding graphic objects (15-1, 15-2),
- an input of a user is detected, which is performed with respect to the switching symbols (16-1, 16-2) on or in front of the display device (2), wherein the input is performed on a touch-sensitive surface (4), which is formed on the display surface, in that the touch-sensitive surface (4) is touched in the case of a switching symbol (16-1, 16-2) with an actuating object (13), which actuating object (13) is thereupon moved on the touch-sensitive surface (4) and subsequently the contact of the actuating object (13) is released again from the touch-sensitive surface (4), and
- depending on the type of the input detected and depending on, in respect to which switching symbol (16-1, 16-2) the input was performed, a control command is generated for the air conditioning device (9) of the vehicle.

3. The method according to Claim 2,
**characterized in**
**that** the input is performed on a touch-sensitive surface (4), which is formed on the display surface (2) in that the touch-sensitive surface (4) is touched in the case of a switching symbol (16-1, 16-2) with an actuating object (13), thereupon a switching element(17) belonging to the switching symbol (16-1, 16-2) is displayed, which is actuated by the user, which actuation of the user is detected and is converted into a control command for the air conditioning device (9) of the vehicle (10).

4. The method according to Claim 2 or 3,
**characterized in**
**that** the switching symbols (16-1, 16-2) comprise arrow representations and to adjust the inflow rate of the air flowing into the interior (11) through the ventilation elements (12-1, 12-2) the touch-sensitive surface (4) is touched in the case of the arrow representation of a switching symbol (16-1, 16-2) with the actuating object (13), which actuating object (13) is thereupon moved on the touch-sensitive surface (4) in the direction of the desired inflow direction and subsequently the contact of the actuating object (13) is released again from the touch-sensitive surface (4).

5. The method according to any one of Claims 2 to 4,
**characterized in**
**that** the switching symbols (16-1, 16-2) comprise arrow representations and to adjust the inflow direction of the air flowing into the interior (11) through the ventilation elements (12-1, 12-2) the touch-sensitive surface (4) is touched in the case of the arrow representation of a switching symbol (16-1, 16-2) with the actuating object (13), which actuating object (13) is thereupon moved on the touch-sensitive surface (4) in the direction of the arrow or in the opposite direction and subsequently the contact of the actuating object (13) is released again from the touch-sensitive surface (4).

6. The method according to any one of Claims 2 to 5,
**characterized in**
**that** an approach of an actuating object (13) to the display surface (2) is detected by the entry of the actuating object (13) into a detection region (8) in front of the display surface (2) and, if the entry of the actuating object (123) into the detection region (8) was detected, the switching symbols (16-1, 16-2) are represented changed.

## Revendications

1. Dispositif de commande (6) pour le réglage d'un dispositif de climatisation (9) d'un véhicule (10), qui comprend des éléments de ventilation (12-1, 12-2) pour la climatisation de l'habitacle (11) du véhicule (10), avec
- une surface d'affichage (2),
- un dispositif d'entrée (4) pour l'entrée d'instructions de commande pour le dispositif de climatisation (9) du véhicule (10) et
- un dispositif de commande (3) qui est couplé avec la surface d'affichage (2) et le dispositif d'entrée (4), avec lequel des données graphiques pour un affichage sur la surface d'affichage (2) peuvent être générées et avec lequel les instructions de commande entrés au moyen du dispositif d'entrée (4) peuvent être converties en signaux de commande pour le dispositif de climatisation (9) du véhicule (10),
- le dispositif de commande (3) étant conçu de façon à ce que ces données graphiques soient générées, de façon à ce que sur la surface d'affichage (2), une représentation graphique (14) de l'habitacle (11) du véhicule (10) soit reproduite avec des objets graphiques (15-1, 15-2) correspondant aux éléments de ventilation (12-1, 12-2), moyennant quoi, à l'intérieur de la représentation graphique (14) de l'habitacle (11) du véhicule (10), des symboles de commutation (16-1, 16-2) sont affichés, qui représentent la direction d'écoulement et/ou les débits d'écoulement et/ou la température d'écoulement de l'air entrant par les éléments de ventilation (12-1, 12-2) dans l'habitacle (11),
- à chaque symbole de commutation (16-1, 16-2) correspond un élément de ventilation (12-1, 12-2) réglable séparément, ce qui est visualisé par la proximité de la représentation graphique des symboles de commutation (16-1, 16-2) avec les objets graphiques (15-1, 15-2) correspondants,
- le dispositif d'entrée (4) comprend un dispositif de détection (4 ; 18) au moyen duquel les entrées de l'utilisateur sont détectées, qui sont exécutées en fonction des symboles de commutation (16-1, 16-2) sur ou devant la surface d'affichage (2) et
- le dispositif d'entrée comprend une surface tactile (4) qui est réalisée sur la surface d'affichage (2) et sur laquelle des entrées sont exécutables,
**caractérisé en ce que**
l'entrée sur une surface tactile (4), qui est réalisée sur la surface d'affichage, est exécutable grâce au fait que la surface tactile (4) est touchée, au niveau d'un symbole de commutation (16-1, 16-2), avec un objet d'actionnement (13), l'objet d'actionnement (13) étant alors déplacé sur la surface tactile (4) puis le contact de l'objet d'actionnement (13) est à nouveau relâché de la surface tactile (4).

2. Procédé de réglage d'un dispositif de climatisation (9) d'un véhicule (10), dans lequel
- une surface d'affichage (2) reproduit une représentation graphique (14) de l'habitacle (11) du véhicule (10) avec des objets graphiques (15-1, 15-2) qui correspondent aux éléments de ventilation (12-1, 12-2), dans laquelle sont affichés des symboles de commutation (16-1, 16-2) qui représentent la direction d'écoulement et/ou les débits d'écoulement et/ou la température d'écoulement de l'air entrant par les éléments de ventilation (12-1, 12-2) dans l'habitacle (11),
- moyennant quoi, à chaque symbole de commutation (16-1, 16-2) correspond un élément de ventilation (12-1, 12-2) réglable séparément, ce qui est visualisé par la proximité de la représentation graphique des symboles de commutation (16-1, 16-2) avec les objets graphiques (15-1, 15-2) correspondants,
- une entrée d'un utilisateur est détectée, qui est exécutée en fonction d'un symbole de commutation (16-1, 16-2) sur ou devant la surface d'affichage (2), l'entrée étant exécutée sur une surface tactile (4) qui est réalisée sur la surface d'affichage, grâce au fait que la surface tactile (4) est touchée, au niveau d'un symbole de commutation (16-1, 16-2), avec un objet d'actionnement (13), l'objet d'actionnement (13) étant alors déplacé sur la surface tactile (4) puis le contact de l'objet d'actionnement (13) est à nouveau relâché de la surface tactile (4) et
- en fonction du type d'entrée détecté, et en fonction du symbole de commutation (16-1, 16-2) par rapport auquel l'entrée a été exécutée, une instruction de commande est générée pour le dispositif de climatisation (9) du véhicule.

3. Procédé selon la revendication 2,
**caractérisé en ce que**
l'entrée sur une surface tactile (4), qui est réalisée sur la surface d'affichage (2), est exécutée grâce au fait que la surface tactile (4) est touchée, au niveau d'un symbole de commutation (16-1, 16-2), avec un objet d'actionnement (13), un élément de commutation (17) appartenant au symbole de commutation (16-1, 16-2) est alors affiché, qui est actionné par l'utilisateur, l'actionnement par l'utilisateur est détecté et converti en une instruction de commande pour le dispositif de climatisation (9) du véhicule (10).

4. Procédé selon la revendication 2 ou 3,
**caractérisé en ce que**
les symboles de commutation (16-1, 16-2) comprennent des représentations fléchées et, pour le réglage de la direction d'écoulement de l'air entrant par les éléments de ventilation (12-1, 12-2) dans l'habitacle (11), la surface tactile (4) est touchée, au niveau de la représentation fléchée d'un symbole de commutation (16-1, 16-2), avec l'objet d'actionnement (13), l'objet d'actionnement (13) est alors déplacé sur la surface tactile (4) dans la direction d'écoulement souhaité puis le contact de l'objet d'actionnement (13) est à nouveau relâché de la surface tactile (4).

5. Procédé selon l'une des revendications 2 à 4,
**caractérisé en ce que**
les symboles de commutation (16-1, 16-2) comprennent des représentations fléchées et, pour le réglage du débit d'écoulement de l'air entrant par les éléments de ventilation (12-1, 12-2) dans l'habitacle (11), la surface tactile (4) est touchée, au niveau de la représentation fléchée d'un symbole de commutation (16-1, 16-2), avec l'objet d'actionnement (13), l'objet d'actionnement (13) est alors déplacé sur la surface tactile (4) dans la direction de la flèche ou dans la direction opposée puis le contact de l'objet d'actionnement (13) est à nouveau relâché de la surface tactile (4).

6. Procédé selon l'une des revendications 2 à 5,
**caractérisé en ce que**
une approche d'un objet d'actionnement (13) en direction de la surface d'affichage (2) est détectée par une entrée de l'objet d'actionnement (13) dans une zone de détection (8) devant la surface d'affichage (2) et, lorsque l'entrée de l'objet d'actionnement (13) dans la zone de détection (8) a été détectée, les symboles de commutation (16-1, 16-2) sont représentés de manière modifiée.
